(19) Europäisches Patentamt
European Patent Office
Office européen des brevets

(11) Veröffentlichungsnummer: 0 355 511
A2

(12) # EUROPÄISCHE PATENTANMELDUNG

(21) Anmeldenummer: 89114310.9

(22) Anmeldetag: 03.08.89

(51) Int. Cl.[4]: C08L 69/00 , C08L 51/04 , //(C08L69/00,51:04,25:02), (C08L51/04,69:00,25:02)

(30) Priorität: 16.08.88 DE 3827642

(43) Veröffentlichungstag der Anmeldung: 28.02.90 Patentblatt 90/09

(84) Benannte Vertragsstaaten: DE ES FR GB IT

(71) Anmelder: BAYER AG
D-5090 Leverkusen 1 Bayerwerk(DE)

(72) Erfinder: Eckel, Thomas, Dr.
Gneisenaustrasse 15a
D-4047 Dormagen 1(DE)
Erfinder: Wittmann, Dieter, Dr.
Wolfskaul 4
D-5000 Köln 80(DE)
Erfinder: Leitz, Edgar, Dr.
Goethestrasse 63
D-4047 Dormagen 1(DE)
Erfinder: Schoeps, Jochen, Dr.
Windmühlenstrasse 126
D-4150 Krefeld(DE)
Erfinder: Ott, Karl-Heinz, Dr.
Paul-Klee-Strasse 54
D-5090 Leverkusen 1(DE)
Erfinder: Peters, Horst, Dr.
Winterbergstrasse 25
D-5090 Leverkusen 3(DE)

(54) **Tieftemperaturzähe thermoplastische Formmassen aus aromatischen Polyestercarbonaten und speziellen Pfropfpolymerisaten.**

(57) Die erfindungsgemäßen thermoplastischen Formmassen aus aromatischen Polyestercarbonaten und speziellen Pfropfpolymerisaten besitzen neben hoher Raumtemperatur- und guter Tieftemperaturkerbschlagzähigkeit eine sehr hohe Fließnahtfestigkeit und lassen sich zur Herstellung von Formkörpern verwenden.

EP 0 355 511 A2

# Tieftemperaturzähe thermoplastische Formmassen aus aromatischen Polyestercarbonaten und speziellen Pfropfpolymerisaten

Die Erfindung betrifft thermoplastische Formmassen auf Basis von vollaromatischen Polyestercarbonaten und gepfropftem Dienkautschuk, ein Verfahren zu ihrer Herstellung durch Mischen der Komponenten bei erhöhter Temperatur und ihre Verwendung zur Herstellung von Formkörpern, vornehmlich durch Spritzguß.

Schlagzähe Formmassen auf Basis vollaromatischer Polyestercarbonate sind bekannt.

In Res. Discl. 1982, 217, 146 wird die Schlagzähigkeit von aromatischen Polyestercarbonaten durch Zusatz von Modifikatoren des ABS-Typs verbessert.

In EP 0 119 311 werden verschiedene Zusätze zur Verbesserung der Schlagzähigkeit vorgeschlagen, vorzugsweise gepfropfte Acrylatkautschuke oder Olefin-Acrylat-Copolymere. Diese Modifikatoren sind nur dann wirksam, wenn der Terephthalsäureanteil am Gesamt-Esteranteil höchstens 25 % beträgt.

EP 0 131 188 beschreibt schlagzähe Formmassen aus aromatischen Polyestercarbonaten und gepfropften EPDM-Kautschuken.

In DE-OS 3 641 990 wird Polycarbonat mit speziellen Pfropfpolymerisaten bestehend aus einer Pfropfgrundlage aus vernetztem Polybutadien und einer Pfropfauflage aus Methylmethacrylat und n-Butylacrylat schlagzäh modifiziert, wobei sowohl eine gute Tieftemperaturzähigkeit als auch eine hohe Fließnahtfestigkeit erhalten wird.

Für viele Anwendungsbereiche von Polyestercarbonat-Formmassen, insbesondere im Kfz-Sektor, ist neben einer hohen Kerbschlagzähigkeit sowohl bei Raumtemperatur als auch bei tiefen Temperaturen auch ein ausreichend hohes Niveau der Zusammenfließnahtfestigkeit notwendig, das erforderlich ist, um auch größere Spritzgußteile mit mehreren Angußstellen in ausreichender Qualität zu erhalten.

Zwar läßt sich mit Kautschukmodifikatoren auf der Basis von Butadienkautschuken, wie den in Res. Discl. 1982, 217, 146 beschriebenen ABS-Typen, ein für viele Anwendungen ausreichendes Niveau der Raumtemperatur- und Kältezähigkeit von aromatischen Polyestercarbonat-Formmassen erzielen; jedoch zeigen sich bei größeren Spritzgußteilen nachteilige mechanische Eigenschaften wegen zu geringer Fließnahtfestigkeit. Durch den Einsatz von Methylmethacrylat-gepfropften Acrylat- oder EPDM-Kautschuken in aromatischen Polyestercarbonat-Formmassen werden zwar die Kerbschlagzähigkeiten der Formteile bei Raumtemperatur verbessert, jedoch nur auf Kosten einer beträchtlich reduzierten Tieftemperaturzähigkeit.

Es wurde nun gefunden, daß sich Mischungen aus vollaromatischen Polyestercarbonaten und gepfropften Dienkautschuken zu Formmassen mit hoher Raumtemperatur- und guter Tieftemperaturkerbschlagzähigkeit sowie sehr hoher Fließnahfestigkeit verarbeiten lassen, wenn man speziell gepfropfte, teilchenförmige Dienkautschuke einsetzt. Die erfindungsgemäßen Dienpfropfkautschuke besitzen eine spezielle Pfropfhülle, die zum überwiegenden Teil aus Methylmethacrylat und kleineren Anteilen mindestens eines Acrylsäureesters eines primären oder sekundären einwertigen aliphatischen Alkohols oder des tert.-Butanols bestehen.

Die oben erwähnten Eigenschaften sind als umso überraschender anzusehen, da Mischungen aus aromatischen Polyestercarbonaten erfahrungsgemäß wesentlich höhere Verarbeitungstemperaturen (280 bis 320 °C) benötigen als die in der DE-OS 3 641 990 beschriebenen Polycarbonat-Mischungen (240 bis 260 °C). Im Falle der Polyestercarbonate bleibt bei Verwendung der erfindungsgemäßen Pfropfpolymerisate selbst bei höheren Verarbeitungstemperaturen das günstige Eigenschaftsbild bezüglich Tieftemperaturzähigkeit und Fließnahtfestigkeit erhalten.

Das spezielle Pfropfpolymerisat zeichnet sich also außerdem durch verbesserte thermische Beständigkeit aus.

Gegenstand der Erfindung sind thermoplastische Formmassen enthaltend

A. 5-99, vorzugsweise 40-98, insbesondere 60-97 Gew.-Tl. eines vollaromatischen Polyestercarbonats und

B. 1-60, vorzugsweise 2-50, insbesondere 3-40 Gew.-Tl. eines Pfropfpolymerisats von

B.1 5-90, vorzugsweise 10-70, insbesondere 15-50 Gew.-Tl. einer Mischung aus

B.1.1 20-99, vorzugsweise 50-97, insbesondere 70-95 Gew.-Tl. Methylmethacrylat und

B.1.2 1-40, vorzugsweise 1-20 Gew.-Tl. Acrylsäureester eines primären oder sekundären einwertigen aliphatischen $C_2$-$C_{10}$-Alkohols und gegebenenfalls

B.1.3 0,1-10, vorzugsweise 0,5-4 Gew.-Tl. Acryl- oder Methacrylsäureester des tert. Butanols und/oder

B.1.4 0,1-30, vorzugsweise 0,5-20 Gew.-Tl. einer Mischung aus 50-95 Gew.-Tl. Styrol, α-Methylstyrol, $C_1$-$C_4$-Alkyl- oder Halogenkernsubstituentem Styrol oder Mischungen daraus und 5-50 Gew.-Tl. Acrylnitril,

Methacrylnitril, Maleinsäureanhydrid, $C_1$-$C_4$-Alkyl oder Phenyl-N-substituiertem Maleinimid oder Mischungen daraus, wobei die Summe der Gewichtsteile aus B.1.1 und B.1.2 sowie gegebenenfalls B.1.3 und/oder B.1.4 100 Gew.-Tl. betragen soll, auf

B.2 10-95, vorzugsweise 30-90, insbesondere 50-85 Gew.-Tl. eines vernetzten Dienkautschuks mit einem mittleren Teilchendurchmesser $d_{50}$ von 0,05 bis 1, vorzugsweise 0,05 bis 0,8 µm und insbesondere von 0,05 bis 0.6 µm, und einem Gelgehalt von mehr als 50, vorzugsweise mehr als 70, insbesondere 73 bis 98 Gew.-%, bezogen auf Gewicht an B.2 sowie gegebenenfalls

C. 0,1-50 Gew.-Tl., vorzugsweise 0,5-40, insbesondere 0,8-30 Gew.-Tl. eines thermoplastischen Vinyl-Copolymerisats aus

C.1 50-98, bevorzugt 60-95 Gew.-Tl. Styrol, α-Methylstyrol, kernsubstituiertem Styrol, Methylmethacrylat oder Mischungen daraus und

C.2 50-2, bevorzugt 40-5 Gew.-Tl. Acrylnitril, Methacrylnitril, Methylmethacrylat, Maleinsäureanhydrid, N-substituiertem Maleinimid oder Mischungen daraus, wobei die Summe der Gew.-Tl. aus A und B sowie gegebenenfalls C 100 Gew.-Tle betragen soll.

Komponente A

Vollaromatische Polyestercarbonate A im Sinne der Erfindung sind überwiegend bis ausschließlich aus aromatischen $C_8$-$C_{14}$-Dicarbonsäuren, $C_6$-$C_{20}$-Diphenolen und Kohlensäurederivaten, z.B. Phosgen, aufgebaut.

Bevorzugte aromatische Dicarbonsäuren sind beispielsweise: Isophthalsäure, Terephthalsäure, Diphenylether-4,4′-dicarbonsäure, Naphthalin-2,6-dicarbonsäure sowie beliebige Mischungen der Dicarbonsäuren. Besonders bevorzugt sind Iso- und Terephthalsäure. Bevorzugtes Kohlensäurederivat ist Phosgen.

Bevorzugte Diphenole für die Herstellung der vollaromatischen Polyestercarbonate A sind Verbindungen der Formel:

HO-Z-OH (I),

worin Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel II

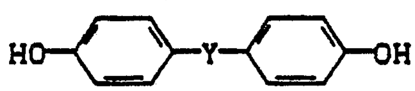

(II),

in der

Y eine Einfachbindung, einen Alkylen- oder Alkylidenrest mit 1-7 C-Atomen, einen Cycloalkylen- oder Cycloalkylidenrest mit 5-12 C-Atomen, -O-, -S-, $-\underset{\underset{O}{\|}}{S}-$

, $-SO_2$ oder $-\underset{\underset{O}{\|}}{C}-$

bedeutet,

sowie deren kernalkylierte und kernhalogenierte Derivate, z.B.

Hydrochinon,

Resorcin,

Dihydroxydiphenyle,

Bis-(hydroxyphenyl)-alkane,

Bis-(hydroxyphenyl)-cycloalkane,

Bis-(hydroxyphenyl)-ether,

Bis-(hydroxyphenyl)-ketone,

Bis-(hydroxyphenyl)-sulfoxide,

Bis-(hydroxyphenyl)-sulfone und

α,α′-Bis-(hydroxyphenyl)-diisopropylbenzole sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4′-Dihydroxydiphenylsulfid, 4,4′-Dihydroxydiphenylsulfon sowie deren di- und tetrahalogenierte Derivate. Besonders bevorzugt ist Bisphenol A. Es können auch beliebige

Mischungen der genannten Diphenole verwendet werden.

Mögliche Verzweigungsmittel sind in den DE-OS 2 940 024 und 3 007 934 genannt.

Als Kettenabbrecher für die vollaromatischen Polyestercarbonate A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet, Weiterhin kommen die Chloride von aliphatischen Monocarbonsäuren mit bis zu 22 C-Atomen in Betracht.

Am Aufbau der vollaromatischen Polyestercarbonate A können auch bis jeweils 30 Mol-%, bevorzugt bis 20 Mol-%, der aromatischen Dicarbonsäuren und Dihydroxyverbindungen durch aliphatische Baugruppen, z.B. Adipinsäure sowie Butandiol-1,4, ersetzt sein.

Weiterhin können die vollaromatischen Polyestercarbonate A teilweise aus aromatischen Hydroxycarbonsäuren, z.B. p-Hydroxy-benzoesäure, aufgebaut sein. Der Anteil solcher Hydroxycarbonsäuren kann bis zu 100 Mol-%, bevorzugt 30 bis 50 Mol-%, (bezogen auf Bisphenol) betragen.

Falls Iso- und Terephthalsäure gemeinsam am Aufbau der vollaromatischen Polyestercarbonate beteiligt sind, kann der Terephthalsäureanteil 1 bis 99 %, bevorzugt 25 bis 75 % des Gesamtesteranteiles betragen.

Die vollaromatischen Polyestercarbonate können 1 bis 99, vorzugsweise 30 bis 80 Mol-% Estergruppen, bezogen auf die Summe von Ester-und Carbonatgruppen, enthalten.

Sowohl der Ester- als auch der Carbonatanteil der vollaromatischen Polyestercarbonate A kann in Form von Blöcken oder statistisch verteilt im Polykondensat vorliegen.

Die Herstellung der vollaromatischen Polyestercarbonate A ist bekannt und z.B. in den DE-OSen 1 495 626, 2 232 877, 2 703 376, 3 000 610, 2 714 544, 2 940 024, 3 007 934 beschrieben. Besonders bevorzugt ist das Phasengrenzflächenverfahren.

Die relative Lösungsviskosität ($\eta$rel) der vollaromatischen Polyestercarbonate A liegt im Bereich 1,18 bis 1,4, vorzugsweise 1,22 bis 1,3 (gemessen an Lösungen von 0,5 g Polyestercarbonat A in 100 ml $CH_2Cl_2$-Lösung bei 25 °C).

Ein gewünschter Carbonatgruppengehalt kann auch durch Mischen von vollaromatischem Polyestercarbonat mit aromatischem Polycarbonat eingestellt werden. Das bedeutet, daß eine erfindungsgemäße Komponente A auch dann vorliegt, wenn das vollaromatische Polyestercarbonat, teilweise, d.h. zu 5 bis 95 Gew.-%, bevorzugt 10 bis 50 Gew.-%, durch ein aromatisches Polycarbonat ersetzt wird. Als aromatische Polycarbonate können Homopolycarbonate und Copolycarbonate eingesetzt werden. Diese sind z.B. in US-PS 2 999 835, GB-PS 772 627 und DE-OS 3 334 872 beschrieben.

## Komponente B

Bevorzugte Pfropfpolymerisate B sind solche, die man durch Pfropfpolymerisation von 5 bis 90 Gew.-Tl., vorzugsweise von 10 bis 70 Gew.-Tl., insbesondere 15 bis 50 Gew.-Tl., wenigstens eines Vinylmonomerengemisches aus Methylmethacrylat und einem Acrylsäureester eines primären oder sekundären einwertigen aliphatischen $C_2$-$C_{10}$-Alkohols, wie beispielsweise n-Butylacrylat, auf 10 bis 95, vorzugsweise 30 bis 90, insbesondere 50 bis 85 Gew.-Tl. eines teilchenförmigen, vernetzten Dienkautschuks, erhält.

Zusätzlich können als Pfropfmonomere noch bis 10 Gew.-Tl. des Acryl- oder Methacrylsäureesters des tertiären Butanols und/oder bis 30 Gew.-Tl. einer Mischung aus Styrol oder $\alpha$-Methylstyrol und Acrylnitril, Methacrylnitril oder Maleinsäureanhydrid auf die Pfropfkautschukgrundlage aufgepfropft werden.

Besonders bevorzugte Pfropfmonomere sind Mischungen von Methylmethacrylat und n-Butylacrylat im Mengenverhältnis 85:15 bis 98:2 sowie Mischungen davon mit t-Butylacrylat und/oder mit Styrol und Acrylnitril (Verhältnis: 72:28).

Bevorzugte Dienkautschuke B.2 sind vernetzte Homo-und/oder Copolymerisate aus konjugierten $C_4$-$C_6$-Dienen. Bevorzugtes Dien ist Butadien-1,3. Die Diencopolymerisate können neben den Dienresten bis zu 20 Gew.-%, bezogen auf Diencopolymerisat, Reste anderer ethylenisch ungesättigter Monomerer, wie Styrol, Acrylnitril, Ester der Acryl- oder Methacrylsäure mit einwertigen $C_1$-$C_4$-Alkoholen, wie Methylacrylat, Ethylacrylat, Methylmethacrylat und Ethylmethacryat, einpolymerisiert enthalten.

Die Herstellung der Dienkautschuk-Pfropfgrundlage B.2 und der daraus hergestellten Pfropfpolymerisate B. wird z.B. in "Methoden der organischen Chemie" (Houben-Weyl), Bd. 14/1, Georg Thieme Verlag, Stuttgart 1961, S. 393 bis 406, sowie in "Ullmanns Encyclopädie der technischen Chemie", 4. Auflage, Bd. 19, Verlag Chemie, Weinheim, 1981, S. 279 bis 284, beschrieben.

Bei der Herstellung der Pfropfpolymerisate B durch Pfropfcopolymerisation, die üblicherweise in

Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisat B im Sinne der Erfindung ist deshalb das durch Polymerisation von Pfropfmonomeren B.1 in Gegenwart des Dienkautschuks B.2 erhaltene Produkt.

Die erfindungsgemäßen Formmassen weisen optimale Eigenschaften auf, wenn die Menge an freiem (Co)Polymerisat im Pfropfpolymerisat B 15 Gew.-%, vorzugsweise 10 Gew.-%, insbesondere 7 Gew.-%, bezogen auf B, nicht übersteigt.

Der Staudinger-Index dieser freien (Co)Polymerisate soll weniger als 0,6 dl/g, vorzugsweise weniger als 0,4 dl/g betragen, gemessen in Dimethylformamid bei 25 °C.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), 782-796) oder mittels Elektronenmikroskopie und anschließender Teilchenauszählung (G. Kämpf, H. Schuster, Angew. makromolekulare Chemie, 14, (1970), 111-129) oder mittels Lichtstreuungsmessungen.

Die Gelgehalte der vernetzten Dienkautschuke werden bestimmt bei 25 °C in Toluol (M. Hoffmann, H. Krämer, R. Kuhn, Polymeranalytik I und II, Georg Thieme Verlag, Stuttgart 1977).

Als Radikalbildner können anorganische oder organische Peroxide oder Hydroperoxide, z.B. Verbindungen des Typs $R_1OOR_2$ eingesetzt werden ($R_1$ = $R_2$ = Alkyl, Aryl, Acyl, Wasserstoff; $R_1$ = Alkyl, Acryl, Acyl, $R_2$ = Wasserstoff). Die Gesamtzahl der Kohlenstoffatome in den Resten $R_1$ und $R_2$ ist ≤30, bevorzugt, ≤25. Beispiele sind Peroxide oder Hydroperoxide wie Dibenzoylperoxid, tert.-Butylhydroperoxid, Cumolhydroperoxid, Laurylperoxid, 2,5-Di-tert.-Butyl-2,5-dimethylhexyl-peroxid, Di-tert.-butyl-peroxid oder Di-cumylperoxid.

Des weiteren sind anorganische Verbindungen mit einer O-O-Gruppierung, wie Peroxide, Per-Verbindungen von Säuren des Schwefels, z.B. Persulfate, oder auch Perborate als Radikalbildner geeignet. Bevorzugt werden Persulfate, z.B. $K_2S_2O_8$. Beispiele sind $(NH_4)_2S_2O_8$, $Na_2O_2$, $NaBO_3 \cdot 4H_2O$, $Na_2B_4O_8 \cdot 10\ H_2O$.

Ein ganz besonders bevorzugter Mengenbereich an Peroxid/Hydroperoxid-Verbindungen liegt bei 0,05 bis 0,30 Gew.-%.

Die so hergestellten Pfropfpolymerisate B können nach bekannten Verfahren aufgearbeitet werden, z.B. durch Koagulation der Latices mit Elektrolyten (Salzen, Säuren oder Gemischen davon) und anschließende Reinigung und Trocknung.

## Komponente C

Bevorzugte Vinyl-Copolymerisate C sind solche aus wenigstens einem Monomeren aus der Reihe Styrol, Methylmethacrylat α-Methylstyrol und/oder kernsubstituiertem Styrol mit wenigstens einem Monomeren aus der Reihe Acrylnitril, Methacrylnitril, Methylmethacrylat, Maleinsäureanhydrid und/oder N-subst.-Maleinimid.

Copolymerisate C können auch bei der Pfropfpolymerisation zur Herstellung der Komponente B als Nebenprodukte entstehen, besonders dann, wenn große Mengen Monomere auf kleine Mengen Kautschuk gepfropft werden.

Die erfindungsgemäß einzusetzende Menge an Copolymerisat C von 0,1 bis 50 Gew.-Tl., bezogen auf 100 Gew.-Tl. aus A + B + C, bezieht diese Nebenprodukte der Pfropfpolymerisation nicht mit ein.

Die Copolymerisate C sind harzartig, thermoplastisch und kautschukfrei. Besonders bevorzugte erfindungsgemäße Copolymerisate C sind statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Anstelle von Styrol können die Polymeren auch kernsubstituierte Styrole, wie p-Methylstyrol, 2,4-Dimethylstyrol und andere substituierte Styrole, wie α-Methylstyrol, enthalten.

Die Molekulargewichte (Zahlenmittel Mn) der erfindungsgemäß geeigneten statistisch aufgebauten Styrol-Maleinsäureanhydrid-Copolymeren gemäß Komponente C können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25° C; siehe hierzu Hoffmann, Krämer, Kuhn, Polymeranalytik I, Stuttgart 1977, S. 316 ff.).

Die erfindungsgemäßen Formmassen können weitere, für vollaromatische Polyestercarbonate sowie für Pfropfpolymerisate oder Vinylcopolymeriste bekannte Zusätze, wie Stabilisatoren, Pigmente, Entformungsmittel, Flammschutzmittel und/oder Antistatika, in den üblichen Mengen enthalten.

Die erfindunsgemäßen Formmassen können hergestellt werden, indem man die Bestandteile in bekannter Weise vermischt und bei erhöhten Temperaturen, vorzugsweise bei 200 bis 350° C in üblichen Vorrichtungen wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen, enthaltend die Komponente A, B und gegebenenfalls C sowie Stabilisatoren, Pigmente, Entformungsmittel, Flammschutzmittel und/oder Antistatika, das dadurch gekennzeichnet ist, daß man die Komponenten A, B und gegebenenfalls C sowie Stabilisatoren, Pigmente, Entformungsmittel, Flammschutzmittel und/oder Antistatika in bekannter Weise vermischt und bei erhöhten Temperaturen, vorzugsweise bei Temperaturen von 200 bis 350° C, in üblichen Vorrichtungen wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Angegebene Teile bedeuten Gewichtsteile.

A. Vollaromatisches Polyestercarbonat

A 1

Polyestercarbonat mit einem Esteranteil von 50 Mol-% auf Basis von Bisphenol A, Iso- und Terephthalsäure (1:1) mit 3 Mol-%, bezogen auf Bisphenol A-Einheiten, p-Isooctylphenyl-Endgruppen mit einer relativen Viskosität $\eta$rel von 1,30 (gemessen an einer Lösung von 0,5 g Polyestercarbonat in 100 ml $CH_2Cl_2$ bei 25° C).

A 2

Polyestercarbonat mit einem Esteranteil von 80 Mol-% auf Basis von Bisphenol A, Iso- und Terephthalsäure (1:1) mit 3 Mol-%, bezogen auf Bisphenol A-Einheiten, p-Isooctylphenyl-Endgruppen mit einer relativen Viskosität $\eta_{rel}$ von 1,30 (gemessen an einer Lösung von 0,5 g Polyestercarbonat in 100 ml $CH_2Cl_2$ bei 25° C).

A 3

Lineares Polycarbonat auf Basis Bisphenol A mit einer relativen Lösungsviskosität $\eta$rel von 1,26 bis 1,28, gemessen in $CH_2Cl_2$ bei 25° C und in einer Konzentration von 0,5 g/100 ml.

B. Pfropfpolymerisat

B 1

Pfropfpolymerisat, hergestellt durch Emulsionspolymeri sation aus 80 Gew.-% Pfropfgrundlage aus vernetztem Polybutadien (Gelgehalt 85 Gew.-%, gemessen in Toluol) und 20 Gew.-% einer Pfropfauflage aus Methylmethacrylat und n-Butylacrylat im Verhältnis 9:1, mittlerer Teilchendurchmesser $d_{50}$ = 0,4 µm.

B 2 (Vergleich)

Pfropfpolymerisat von 50 Gew.-Tl. eines Copolymerisats aus Styrol und Acrylnitril im Verhältnis 72:28 auf 50 Gew.-Tl. teilchenförmigen vernetzten Polybutadienkautschuk (mittlerer Teilchendurchmesser $d_{50}$ = 0,4 µm) hergestellt durch Emulsionspolymerisation.

B 3 (Vergleich)

Pfropfpolymerisat, hergestellt aus 80 Gew.-% Pfropfgrundlage aus vernetztem Polybutylacrylatkautschuk (Vernetzer: Butylendiacrylat und Allylmethacrylat) und 20 Gew.-% einer Pfropfauflage aus Methylmethacrylat erhältlich von der Firma Rohm & Haas unter dem Handelsnamn Acryloid KM-330.

C. Vinylcopolymerisat

Styrol-Maleinsäureanhydrid-Copolymerisat mit einem Maleinsäureanhydrid-Anteil von 8 % der Firma Arco Polymers, Inc. (Typ Dylark 232) mit einem L-Wert von 1,7 g/10 min und einem Zahlenmittel des Molekulargewichtes von ca. 135 000 g/Mol.

Herstellung und Prüfung der erfindungsgemäßen Formmassen

Die Komponenten A, B und gegebenenfalls C wurden auf einen 3-l-Innenkneter bei Temperaturen zwischen 200 und 300 °C aufgeschmolzen und homogenisiert.

Von den Formmassen werden auf einer Spritzgußmaschine Stäbe der Abmessung 80 x 10 x 4 mm (Verarbeitungstemperatur: 280 °C) hergestellt, an denen die Kerbschlagzähigkeit (nach Methode ISO 180) bei Raumtemperatur, 0 °C, -20 °C, -40 °C und -60 °C gemessen wurde.

Daraus wurde der Zäh-Spröd-Übergang bestimmt, d.h. jener Temperaturbereich, in dem die ersten Sprödbrüche auftreten.

Zur Ermittlung der Fließnahfestigkeit wurde die Schlagzähigkeit nach DIN 53 452 (Charpy-Methode) an der Bindenaht von beidseitig angespritzten Prüfkörpern (Verarbeitungstemperatur: 280 °C) der Dimension 170 x 10 x 4 mm herangezogen.

Die erfindungsgemäße Formmasse aus vollaromatischem Polyestercarbonat (Esteranteil: 50 Mol-%) und Pfropfpolymerisat (Versuch 3) zeigt gegenüber dem Styrol/Acrylnitril-gepfropften Kautschuk (Vergleichsbeispiel 1) bei gleichem Kautschukgehalt eine wesentlich größere Fließnahtfestigkeit und eine höhere Kerbschlagzähigkeit bei tiefen Temperaturen. Auch der Zäh-Spröd-Übergang ist nach tiefen Temperaturen verschoben, d.h. die erfindungsgemäße Formmasse zeigt bei wesentlich tieferen Temperaturen noch ein zähes Bruchverhalten.

Gegenüber dem Vergleichsbeispiel 2, einem mit Methylmethacrylat gepfropften Acrylatkautschuk, verfügt die erfindungsgemäße Formmasse ebenfalls über die wesentlich bessere Tieftemperaturzähigkeit und Fließnahtfestigkeit.

Das günstige Eigenschaftsniveau der erfindungsgemäßen Formmassen bleibt auch dann in voller Höhe erhalten, wenn ein Teil des vollaromatischen Polyestercarbonates durch Polycarbonat ersetzt wird (Versuche 4 und 5).

Auch durch die erfindungsgemäße Zugabe eines Vinylcopolymerisates in kleineren Mengen werden Formmassen erhalten, die, bei gleichem Kautschukgehalt und Verhältnis von Polyestercarbonat zu Polycarbonat, über sehr gute Kerbschlagzähigkeiten bei tiefen Temperaturen sowie gegenüber dem Vergleichsbeispiel 6 über eine deutlich höhere Fließnahtfestigkeit verfügen. Im Vergleich der Beispiele 8 und 9 mit (konstantes Verhältnis von vollaromatischem Polyestercarbonat zu Polycarbonat) wird deutlich, daß die Zugabe des Vinylcopolymerisats C zu einer Anhebung der Kerbschlagzähigkeit bei -20 °C führt.

Tendenziell gleiche Ergebnisse jedoch auf einem niedrigeren Niveau der Kerbschlagzähigkeit werden auch bei Mischungen mit einem Polyestercarbonat, das über einen Esteranteil von 80 Mol-% verfügt, erhalten (Versuche 10 bis 15).

Tabelle:

| Zusammensetzung und Eigenschaften der Formmassen | | | | | | | | | | |
|---|---|---|---|---|---|---|---|---|---|---|
| Beispiel | Zusammensetzung | | | | | | | Fließnahtfestigkeit $a_nF$ kJ/m² | Kerbschlagzähigkeit $a_k$ bei RT (-20 °C) kJ/m² | Zäh/Sprödübergang (°C) |
| | A1 | A2 | A3 | B1 | B2 | B3 | C | | | |
| | Gew.-% | | | | | | | | | |
| 1 (Vergleich) | 85 | - | - | - | 15 | - | - | 47,8 | 32,0 (27,2) | -30/-40 |
| 2 (Vergleich) | 90 | - | - | - | - | 10 | - | 7,1 | 44,0 (28,0) | -20/-30 |
| 3 | 90 | - | - | 10 | - | - | - | 69,2 | 42,7 (41,0) | -40/-50 |
| 4 | 72 | - | 18 | 10 | - | - | - | 76,2 | 46,0 (41,7) | -40/-50 |
| 5 | 60 | - | 30 | 10 | - | - | - | 83,0 | 47,7 (43,6) | -50 |
| 6 (Vergleich) | 60 | - | 15 | - | 15 | - | 10 | 2,7 | 65,5 (40,9) | -20/-30 |
| 7 (Vergleich) | 64 | - | 16 | - | 15 | - | 5 | 6,1 | 52,0 (37,0) | -30 |
| 8 | 64 | - | 16 | 10 | - | - | 10 | 4,7 | 50,9 (44,2) | -30/-40 |
| 9 | 68 | - | 17 | 10 | - | - | 5 | 14,3 | 48,1 (42,6) | -40 |
| 10 (Vergleich) | - | 90 | - | - | 10 | - | - | 14,0 | 27,1 (17,0) | 0 |
| 11 | - | 93,75 | - | 6,25 | - | - | - | 77,1 | 34,0 (20,6 | -10 |
| 12 | - | 87,5 | - | 12,5 | - | - | - | 64,2 | 31,0 (22,8) | -10/-20 |
| 13 | - | 85 | - | 15 | - | - | - | 39,7 | 30,9 (24,2) | -10/-20 |
| 14 | - | 68 | 17 | 15 | - | - | - | 50,3 | 31,4 (32,3) | -20/-30 |
| 15 | - | 56,6 | 28,3 | 15 | - | - | - | 61,9 | 35,2 (35,1) | -30/-40 |

**Ansprüche**

1. Thermoplastische Formmassen enthaltend
A. 5-99 Gew.-Tl. eines vollaromatischen Polyestercarbonats und
B. 1-60 Gew.-Tl. eines Pfropfpolymerisats von
B.1 5-90 Gew.-Tl. einer Mischung aus
B.1.1 20-99 Gew.-Tl. Methylmethacrylat und
B.1.2 1-40 Gew.- Tl. Acrylsäureester eines primären oder sekundären einwertigen aliphatischen $C_2$-$C_{10}$-Alkohols und gegebenenfalls
B.1.3 0,1-10 Gew.-Tl. Acryl- oder Methacrylsäureester des tert. Butanols und/oder
B.1.4 0,1-30 Gew.-Tl. einer Mischung aus 50-95 Gew.-Tl. Styrol, α-Methylstyrol, $C_1$-$C_4$-Alkyl-oder Halogenkernsubstituentem Styrol oder Mischungen daraus und 5-50 Gew.-Tl. Acrylnitril, Methacrylnitril, Maleinsäureanhydrid, $C_1$-$C_4$-Alkyl oder Phenyl-N-substituiertem Maleinimid oder Mischungen daraus, wobei die Summe der Gewichtsteile aus B.1.1 und B.1.2 sowie gegebenenfalls B.1.3 und/oder B.1.4 100 Gew.-Tl. betragen soll, auf
B.2 10-95 Gew.-Tl. eines vernetzten Dienkautschuks mit einem mittleren Teilchendurchmesser $d_{50}$ von 0,05 bis 1µm und einem Gelgehalt von mehr als 50 Gew.-%, bezogen auf Gewicht an B.2, sowie gegebenenfalls
C. 0,1-50 Gew.-Tl. eines thermoplastischen Vinyl-Copolymerisats aus
C.1 50-98 Gew.-Tl. Styrol, α-Methylstyrol, kernsubstituiertem Styrol, Methylmethacrylat oder Mischungen daraus und
C.2 50-2 Gew.-Tl. Acrylnitril, Methacrylnitril, Methylmethacrylat, Maleinsäureanhydrid, N-substituiertem Maleinimid oder Mischungen daraus,
wobei die Summe der Gew.-Tl. aus A und B sowie gegebenenfalls C 100 betragen soll.

2. Formmassen gemäß Anspruch 1, enthaltend 40-98 Gew.-Tl. Komponente A und 2-50 Gew.-Tl. Komponente B.

3. Formmassen gemäß Ansprüchen 1 und 2, dadurch gekennzeichnet, daß das Pfropfpolymerisat B aus 10 bis 70 Gew.-Tl. Pfropfmonomeren B.1 und 30 bis 90 Gew.-Tl. Dienkautschuk B.2 hergestellt ist.

4. Formmassen gemäß Ansprüchen 1 bis 3, dadurch gekennzeichnet, daß die Komponente B.1 aus 50 bis 97 Gew.-Tl. B.1.1 und 1 bis 20 Gew.-Tl. B.1.2 besteht.

5. Formmassen gemäß Ansprüchen 1 bis 4, dadurch gekennzeichnet, daß die Teilchendurchmesser der Dienkautschuke B.2 0,05 bis 0,8 µm betragen.

6. Formmassen gemäß Ansprüchen 1 bis 5, dadurch gekennzeichnet, daß der Gelgehalt des Dienkautschuks B.2 mehr als 70 Gew.-%, bezogen auf B.2, beträgt.

7. Verfahren zur Herstellung der Formmassen der Ansprüche 1 bis 6, dadurch gekennzeichnet, daß man die Komponenten A, B und gegebenenfalls C sowie Stabilisatoren, Pigmente, Entformungsmittel, Flammschutzmittel und/oder Antistatika in bekannter Weise vermischt und bei erhöhter Temperatur in üblichen Vorrichtungen schmelzcompoundiert oder schmelzextrudiert.

8. Verwendung der Formmassen der Ansprüche 1 bis 6 zur Herstellung von Formkörpern.